# EUROPEAN PATENT SPECIFICATION

(11) **EP 0 684 119 B1**
(45) Date of publication and mention of the grant of the patent: **11.02.1998**
(21) Application number: 95303572.2
(22) Date of filing: 25.05.1995
(51) Int. Cl.: B29C 45/14, B29C 45/17, B29C 49/66, B29C 49/24

(54) **Method for producing a hollow molded article having skin material**
Verfahren zum Herstellen eines mit einem Oberflächenmaterial versehenen Hohlkörpers
Procédé pour la fabrication d'un article creux comprenant une peau intégrale

(30) Priority: 26.05.1994 JP 112983/94
(43) Date of publication of application: 29.11.1995
(73) Proprietor: SUMITOMO CHEMICAL COMPANY LIMITED, Osaka-shi, Osaka 541 (JP)
(72) Inventor: Matsumoto, Masahito, Ibaraki-shi, Osaka 567 (JP); Funakoshi, Satoru, Osaka-shi, Osaka 533 (JP); Kitayama, Takeo, Takatsuki-shi, Osaka 569 (JP); Matsubara, Shigeyoshi, Osaka-shi, Osaka 533 (JP)
(74) Representative: Abbie, Andrew Kenneth

(56) References cited:
- EP-A- 0 320 925
- EP-A- 0 560 522
- US-A- 3 488 801
- US-A- 5 127 814
- PATENT ABSTRACTS OF JAPAN vol. 017 no. 056 (M-1362) ,4 February 1993 & JP-A-04 267124 (TOYODA GOSEI CO LTD) 22 September 1992,

## Description

The present invention relates to a method for producing a hollow molded article having a skin material thereon.

US-A-5,154,872 proposes a method for producing a resin molded article having a skin material.

US-A-5,277,865 (corresponding to Japanese Patent Laid-Open No.255314/1992) proposes a method for producing a hollow resin molded article.

JP-A-267124/1992 proposes a method for cooling a hollow resin molded article having a skin material.

The inventors have found that the method described in JP-A-267124/1992 suffers from the following problems. According to this known method, a pressurized gas is injected into a molten resin to form a hollow part, after which the gas is then discharged from a gas-discharging hole. Subsequently, a cooling material is injected into the hollow part from a cooling material-supplying section and is retained in the hollow part, and thereafter, a pressurized gas is again injected into the hollow part to recover the cooling material. Therefore, this method has the problems that, during the period from the discharging of the gas until the complete filling of the cooling material, the pressure in the hollow part decreases and/or the rate of cooling becomes ununiform, resulting in distortion of the resulting molded articles.

Further, in the above known method, liquids such as alcohols or water are mainly used as the cooling material and it is required to provide an injection nozzle for the cooling materials in addition to the injection nozzle for pressurized gas, the gas-discharging hole and the venting mechanism. Moreover, this method requires a very complicated apparatus, operation and control for retaining the cooling material in the hollow part for a given period and, thereafter, again introducing a pressurized gas into the hollow part to pressurize and discharge the cooling material.

EP-A-0560522 discloses a method for producing a hollow molded article, the method comprising the steps of:
(a) with a first mold and a second mold in an open state supplying a parison of hot plastics material between the first mold and the second mold;
(b) closing the first mold and the second mold so as to enclose said parison therebetween and cause a first hollow pin and a second hollow pin fixed to one of said molds to be inserted into the parison;
(c) supplying gas through at least one of said hollow pins whereby the parison is brought into contact with the respective cavity faces of the first mold and the second mold and a hollow article is formed;
(d) supplying the gas through the first hollow pin while discharging the gas through the second hollow pin thereby circulating the gas in the hollow article to cool and solidify the hot plastics material; and
(e) opening the first mold and the second mold and removing the hollow article.

The invention provides a method for producing a hollow molded article having a skin material, the method comprising the steps of:
(a) with a first mold and a second mold in an open state, providing a first skin material on the first mold to cover a cavity face of the first mold and a parting face disposed at a periphery of said cavity face and providing a second skin material on the second mold to cover a cavity face of the second mold and a parting face disposed at a periphery of the cavity face of the second mold, said cavity faces each having a desired configuration;
(b) supplying a molten thermoplastic resin between the first skin material and the second skin material;
(c) closing the first mold and the second mold to enclose the molten thermoplastic resin with the first skin material and the second skin material;
(d) inserting a first hollow pin into the molten thermoplastic resin and supplying a gas into the resin through the first hollow pin whereby the first skin material and the second skin material are brought into contact with the respective cavity faces of the first mold and the second mold and a hollow article is formed;
(e) inserting a second hollow pin into said hollow article and supplying the gas through the first hollow pin while discharging the gas through the second hollow pin, thereby circulating the gas in the hollow article to cool and solidify the molten thermoplastic resin; and
(f) opening the first mold and the second mold and removing the hollow article.

The invention also includes a method for producing a hollow molded article having a skin material, the method comprising the steps of:
(a) with a first mold and a second mold in an open state, providing a first skin material on the first mold to cover a cavity face of the first mold and a parting face disposed at a periphery of said cavity face and providing a second skin material on the second mold to cover a cavity face of the second mold and a parting face disposed at a periphery of the cavity face of the second mold, said cavity faces each having a desired configuration;
(b) supplying a molten thermoplastic resin between the first skin material and the second skin material;
(c) closing the first mold and the second mold to enclose the molten thermoplastic resin with the first skin material and the second skin material;
(d) inserting a first hollow pin and a second hollow pin into the molten thermoplastic resin and supplying a gas into the resin through the first hollow pin and the second hollow pin whereby the first skin material and the second skin material are brought into contact with the respective cavity faces of the first mold and the second mold and a hollow article is formed;
(e) supplying the gas through the first hollow pin while discharging the gas through the second hollow pin, thereby circulating the gas in the hollow article to cool and solidify the molten thermoplastic resin; and
(f) opening the first mold and the second mold and removing the hollow article. In which case the second hollow pin is preferably switched from the gas-supplying state to the gas-discharging state while the gas is supplied through the first hollow pin.

Preferably, the molten thermoplastic resin is supplied in an amount of 5-50 vol% of a cavity space to be defined by the cavity face of the first mold and the cavity face of the second mold.

Preferably, the first hollow pin and the second hollow pin are inserted into the molten thermoplastic resin by causing them to project from the cavity face of a said mold.

Preferably, the discharge of the gas through the second hollow pin is started 1-20 seconds after the hollow article is formed.

Preferably, the gas is supplied through the first hollow pin while the gas is discharged through the second hollow pin to keep an internal pressure in the hollow article necessary to maintain the shape of the hollow article.

Preferably, the gas has a temperature which is lower than that of the resin when the gas is injected.

Preferably, the gas is a pressurized gas.

Preferably, the gas is air.

Preferably, the first skin material and the second skin material are fixed to the respective parting faces of the first mold and the second mold such that they do not contact the respective cavity faces of said molds.

The present invention will become more fully understood from the detailed description given hereinbelow and the accompanying drawings which are given by way of illustration only, and thus are not to be considered as limiting the present invention.

Further scope of applicability of the present invention will become apparent from the detailed description given hereinafter. However, it should be understood that the detailed description and specific examples, while indicating preferred embodiments of the invention, are given by way of illustration only, since various changes and modifications within the scope of the appended claims will become apparent to those skilled in the art from this detailed description.

Fig.1 is a schematic sectional view of an example of a pair of molds used in the method of the present invention.

Fig.2 is a schematic sectional view of another example of a pair of molds used in the method of the present invention.

Fig.3 is a timing chart which shows working of the molds, the hollow pins and others in one example of the method of the present invention.

Figs.4, 5 and 9 to 12 are schematic sectional views which show the states in the various steps of the method of producing a hollow molded article having skin materials on the whole surface thereof using the molds shown in Fig.1.

Fig.6 is a schematic sectional view which shows an example of supplying a molten thermoplastic resin in the form of a rod in the method of the present invention.

Fig.7 is a schematic sectional view which shows an example of supplying a molten thermoplastic resin in the form of a sheet in the method of the present invention.

Fig.8 is a schematic sectional view which shows an example of supplying a molten thermoplastic resin in the form of a parison in the method of the present invention.

Fig.13 is a timing chart which shows working of the molds, the hollow pins and others in another example of the method of the present invention.

Figs.14 to 19 are schematic sectional views which show the states in the various steps of the method of producing a hollow molded article having skin materials on the whole surface thereof using the molds shown in Fig.2.

The present invention will be explained in detail below referring to the accompanying drawings. The same reference numerals are used to show the same or corresponding portions in all drawings.

First, the molds used in the method of the present invention will be explained.

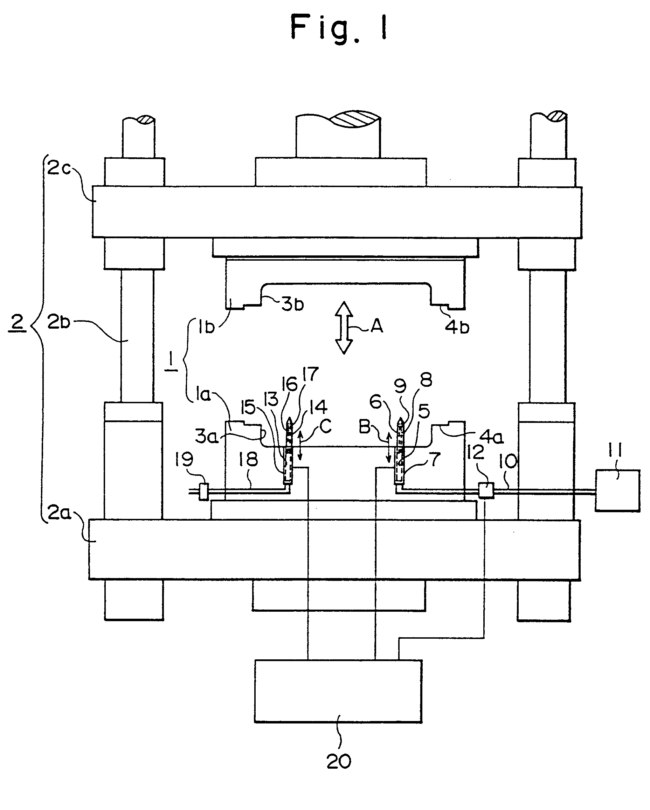

As illustrated in Fig.1, a pair of molds 1 used in the present invention comprises a first mold 1a and a second mold 1b, which are fitted to a pressing apparatus 2. In Fig.1, the first mold 1a is provided at underside (the first mold 1a being lower mold or bottom mold), while the second mold 1b is provided at upper side (the second mold 1b being upper mold or top mold). Further, the first mold 1a is attached to a fixed frame 2a of the pressing apparatus 2 (the first mold 1a being fixed mold), while the second mold 1b is attached to a movable frame 2c which is connected to the fixed frame 2a through connecting rods 2b (the second mold 1b being movable mold). Therefore, the second mold 1b is movable in the direction of A (double ended arrow A) in Fig.1. The first mold may be the top mold and the second mold may be the bottom mold. Further, the first mold may be the movable mold and the second mold may be the fixed mold or both the molds may be the movable molds.

The first mold 1a and the second mold 1b have cavity faces 3a and 3b respectively which conform to the configuration of the desired article and which oppose to each other. When the first mold 1a and the second mold 1b are closed, the cavity faces 3a and 3b form a cavity space which conforms to the configuration of the desired molded article. Further, parting faces 4a and 4b are formed around the cavity faces 3a and 3b, respectively. The parting faces 4a and 4b are surfaces for holding the skin material therebetween when the first mold 1a and the second mold 1b are closed as explained hereinafter.

In Fig.1, a first hole 5 communicating with cavity face 3a is formed in the first mold 1a, and the first hollow pin 6 and the first driving device 7 are put in the first hole 5. The first hollow pin 6 is movable by means of the driving device 7 in the direction of B (as shown by double ended arrow B) in Fig.1 and movable between one position when it is fully received in the first hole 5 and another position in which it projects from the cavity face 3a (Fig.1 shows the hollow pin 6 in the projecting position). The first hollow pin 6 has therein a gas passage 8 through which gas passes and has at the tip portion thereof an opening 9 communicating with the gas passage 8. A gas-supplying device 11 is connected to the gas passage 8 through a gas-supplying pipe 10. A first gas-supplying valve 12 is provided in the gas-supplying pipe 10. The supply of gas to the first hollow pin 6 and supply pressure of the gas can be adjusted by operating the gas-supplying valve 12.

In Fig.1, a second hole 13 communicating with cavity face 3a is formed in the first mold 1a, and the second hollow pin 14 and the second driving device 15 are put in the second hole 13. The second hollow pin 14 is movable by the driving device 15 in the direction of C (as shown by double ended arrow C) in Fig.1 and movable between one position when it is fully received in the second hole 13 and another position in which it projects from the cavity face 3a (Fig.1 shows the hollow pin 14 in the projecting position). The second hollow pin 14 has therein a gas passage 16 through which gas passes and has at the tip portion thereof an opening 17 communicating with the gas passage 16. A gas-discharging pipe 18 is connected to the gas passage 16 and a pressure-control valve 19 is provided in the gas-discharging pipe 18. The end of the gas-discharging pipe 18 disposed remote from the hollow pin 14 open to the air. Therefore gas can be discharged from the second hollow pin 14, and the discharge pressure of the gas from the second hollow pin 14 can be adjusted by operating the pressure-control valve 19.

Furthermore, a controlling device 20 is connected to the first driving device 7, the second driving device 15 and the gas-supply valve 12 to control these devices. By the controlling device 20, the first hollow pin 6 and the second hollow pin 14 are controlled so that they are projected from the cavity face 3a at the time of forming the hollow part and cooling the resin explained hereinafter and they are put in the mold 1a after completion of molding.

The first hollow pin 6 and the second hollow pin 14 may be provided at the second mold 1b or both the molds 1a and 1b. Further, the first hollow pin 6 and the second hollow pin 14 may be provided separately at the first mold 1a and the second mold 1b, respectively, but generally both the hollow pins 6 and 14 are provided at the fixed mold.

The number of the first hollow pin 6 and that of the second hollow pin 14 are optionally selected depending on the size and shape of the desired molded articles, but at least one pin 6 and at least one pin 14 are necessary, respectively. The number of the first hollow pin 6 and that of the second hollow pin 14 are not necessarily the same. The position of the first hollow pin and that of the second hollow pin 14 are not especially limited, but for enhancement of cooling efficiency, it is preferred that they are positioned in optional combination depending on the size and shape of the desired hollow molded articles so that when gas is discharged-from the second hollow pin 14 while gas is injected from the first hollow pin 6, the gas supplied into the hollow part can easily flow in the hollow part without causing partial staying of the gas.

The first hollow pin 6 and the second hollow pin 14 are each in the form of a tube having a closed tip and preferably they are as thin as possible and have a sharp tip in order to make easier to pierce through the skin material and in order to make smaller the marks of the pin which would be left in the molded article after the hollow pin is drawn out.

The opening 9 of the first hollow pin 6 is usually provided in the vicinity of the tip of the hollow pin in the direction perpendicular to the moving direction (B) of the pin 6 in plural numbers so as to discharge the gas in all directions, and typically, four openings are provided at an interval of 90°. The size, number and position of the opening can be optionally selected depending on the conditions such as thickness of the hollow pin, number and position of the hollow pin provided, amount of the gas injected and shape of the desired molded article.

The opening 17 of the second hollow pin 14 may be the same as the opening 9 of the first hollow pin 6, but the size, etc. are optional as far as gas can be discharged therethrough.

The driving devices 7 and 15 are not particularly restricted and, for example, there may be employed air or hydraulic driving devices or solenoid driving devices. The gas-supplying valve 12 and the pressure-control valve 19 are also not particularly restricted and, for example, solenoid valves may be used.

The first mold 1a and the second mold 1b shown in Fig.1 are both so-called female molds where the cavity faces 3a and 3b are formed as a concave, but one of the molds may be so-called male mold where the cavity face is formed as a convex.

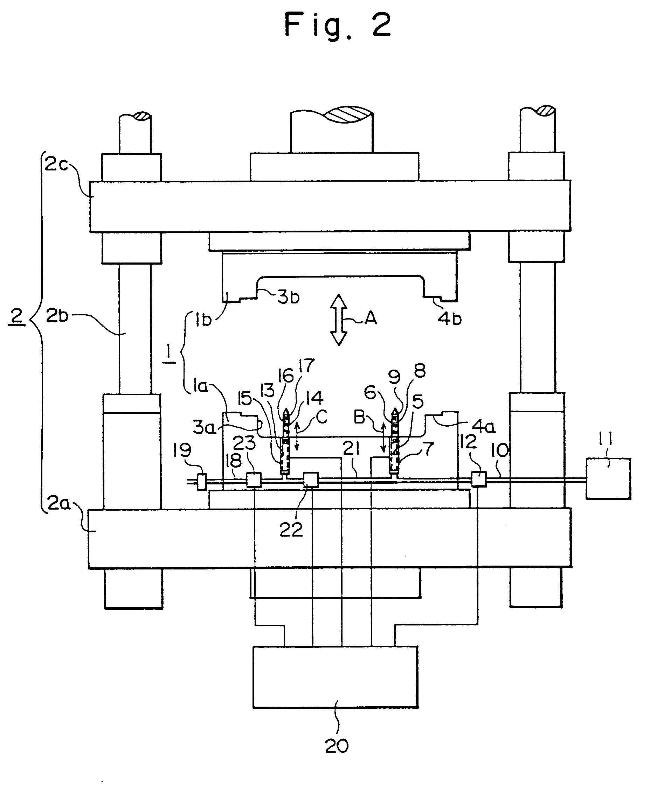

In the molds shown in Fig.1, the first hollow pin 6 is exclusively used for gas-supplying and the second hollow pin 14 is exclusively used for gas-discharging, but the second hollow pin 14 may have both the functions of gas-supplying and gas-discharging. Fig.2 shows another example of the molds having such second hollow pin 14 having both the functions of gas-supplying and gas-discharging.

In the pair of molds shown in Fig.2, the gas-supplying pipe 10 connected to the first hollow pin 6 and the gas-discharging pipe 18 connected to the second hollow pin 14 are connected with each other through a gas conduit pipe 21. A second gas-supply valve 22 is provided in the gas conduit pipe 21 and a gas-discharge valve 23 is provided in the gas-discharging pipe 18. A controlling device 20 is connected to the first driving device 7, the second driving device 15, the first gas-supply valve 12, the second gas-supply valve 22 and the gas-discharge valve 23 to control these devices.

Therefore, in the molds shown in Fig.2, when the first gas-supply valve 12 and the second gas-supply valve 22 are open and the gas-discharge valve 23 is closed, gas is supplied to the first hollow pin 6 and the second hollow pin 14. When the first gas-supply valve 12 and the gas-discharge valve 23 are open and the second gas-supply valve 22 is closed, gas is supplied to the first hollow pin 6 and gas is discharged from the second hollow pin 14. Accordingly, the second hollow pin 14 can be switched from the gas-supplying state to the gas-discharging state by changing the state of the second gas-supply valve 22 being opened and the gas-discharge valve 23 being closed to the state of the second gas-supplying valve 22 being closed and the gas-discharging valve 23 being opened using the controlling device 20. The pressure-control valve 19 may be used as the gas-discharge valve 23.

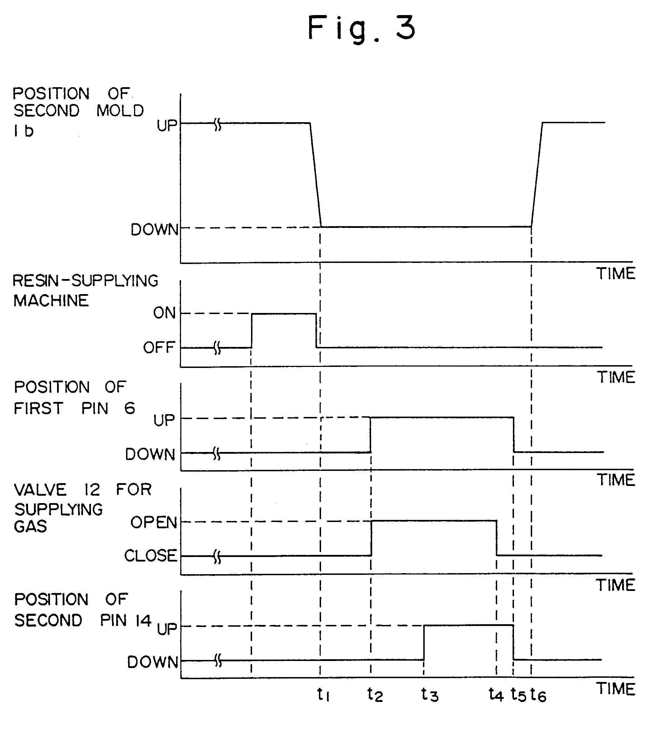

Next, explanation will be given on the method of the present invention for producing a hollow molded article having skin materials on the whole surface thereof using the molds provided with the first hollow pin 6 and the second hollow pin 14. First, production of such hollow molded article using the molds shown in Fig.1 will be explained referring to Figs.3-12.

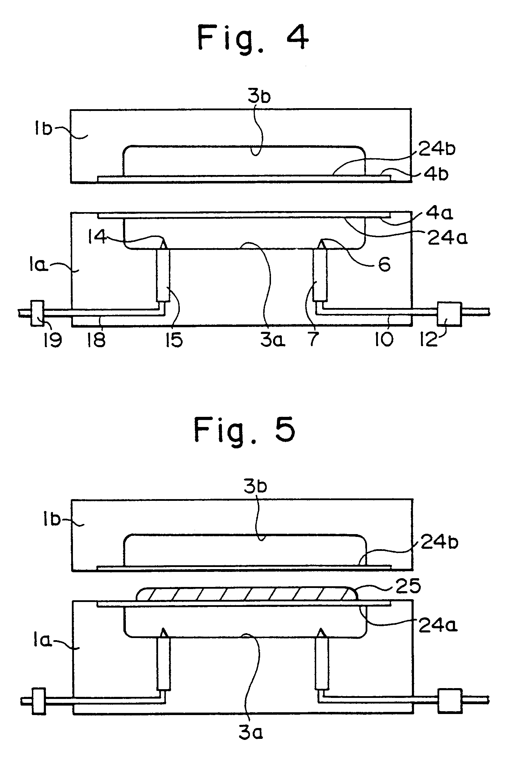

First, in an open state where the second mold 1b is at the position of UP in Fig.3, the first skin material 24a is provided on the first mold 1a to cover the cavity face 3a and parting face 4a of the first mold 1a and the second skin material 24b is provided on the second mold 1b to cover the cavity face 3b and parting face 4b of the second mold 1b (shown in Fig.4). In this case, the skin materials 24a and 24b are provided so that the end portions thereof cover the parting faces 4a and 4b, respectively.

In providing the skin materials, when the mold is of female structure, preferably the skin material is not sagged (kept straight, not contacting the cavity face of the mold) and the end portions thereof are previously fixed on the parting face of the mold as shown in Fig.4. In the case of both the molds being of female structure, if each of the skin materials is provided so that it previously closely contacts with the whole cavity face of the mold, the molten thermoplastic resin cannot be enclosed or wrapped with the skin materials without a space between the resin and the skin material at the subsequent step of closing and, therefore, this is not preferred.

Fixing of the skin material onto the parting face can be carried out by optional methods such as a method using a frame for holding the skin material. As a simple method, a fixing method using a pressure sensitive adhesive double coated tape may be employed.

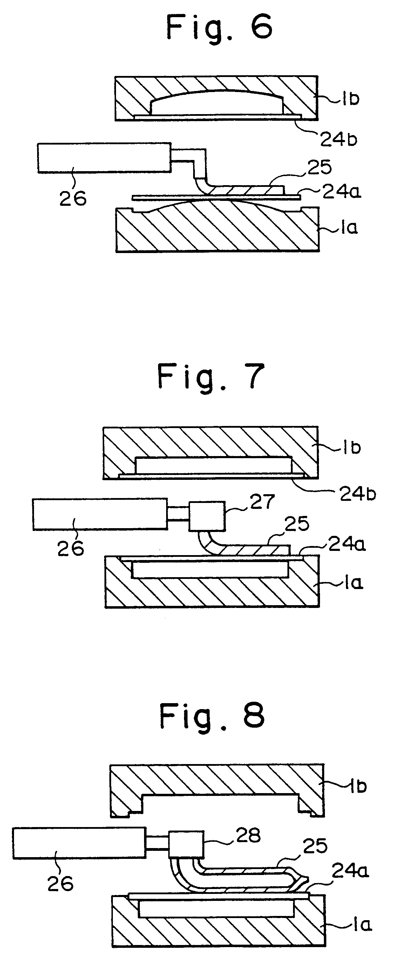

When the mold is of male structure, the skin material is placed in such a manner that it is put on the cavity face and the end portions thereof cover the parting face of the mold as shown in Fig.6.

The skin materials used here are optionally selected depending on the uses thereof such as surface decoration of the hollow molded article, cushioning, heat insulators, etc., but they must have such a heat resistance as not melting or breaking by the heat of the molten thermoplastic resin. Thickness of the skin material varies depending on the kind of the skin material and usually is about 0.3-4 mm.

The skin materials are exemplified by sheet or film of thermoplastic resins, sheet or film of thermoplastic elastomers, thermoplastic resin foamed sheet, thermoplastic elastomer foamed sheet, nonwoven fabric, knitted fabric, and laminates comprising a combination thereof. Among them, preferred are extensible skin materials.

The surface of the skin materials may be decorated with uneven patterns (such as grain patterns), printing, and the like. Further, depending on the uses of the desired molded articles, the first skin material 24a and the second skin material 24b may be the same, or different from each other.

Then, molten thermoplastic resin 25 is supplied between the first skin material 24a and the second skin material 24b which cover the cavity faces 3a and 3b, respectively, by a resin extruder or the like (shown in Fig.5).

For supplying the molten thermoplastic resin 25, the molten resin 25 may be supplied in the form of a rod from a supply opening of a resin-supplying device 26 which is provided outside the molds, as shown in Fig.6. Alternatively, molten resin 25 may be extruded in the form of a sheet from T-die 27 provided at the head of resin-supplying device 26, as shown in Fig.7. Furthermore, molten resin 25 may be extruded in the form of a hollow (in the form of a parison) from parison die 28 provided at the end of resin-supplying device 26, as shown in Fig.8. The supply method of resin 25 is optionally selected depending on the shape of the cavity and the shape of the desired hollow molded article, but, when the hollow molded article is in the form of a pipe, the resin is preferably supplied in the form of a rod and, when the hollow molded article is in the form of nearly a flat plate, the resin is preferably supplied in the form of a sheet. In all of these resin supply methods, it is desired to supply the resin uniformly between the skin materials provided on the cavity faces with moving the molten resin-supply opening and/or moving the mold.

The amount of molten thermoplastic resin 25 supplied varies depending on the volume to be occupied by the hollow part in the desired hollow molded article, but usually is in the range of 5-50 vol% of the volume of cavity to be defined by the cavity faces 3a and 3b of the molds 1a and 1b.

The thermoplastic resins used here include general thermoplastic resins such as polyethylene, polypropylene, polystyrene, acrylonitrile-styrene-butadiene copolymer, polyvinyl chloride, polyamide, polycarbonate, polyethylene terephthalate, polybutylene terephthalate, polyphenylene ether and styrene-acrylonitrile copolymer; thermoplastic elastomers such as EPM and EPDM; mixtures thereof; and polymer alloys thereof.

These thermoplastic resins may contain inorganic fillers such as talc, wollastonite or glass fibers and may naturally contain various customary additives such as antioxidants and ultraviolet absorbers, or various colorants.

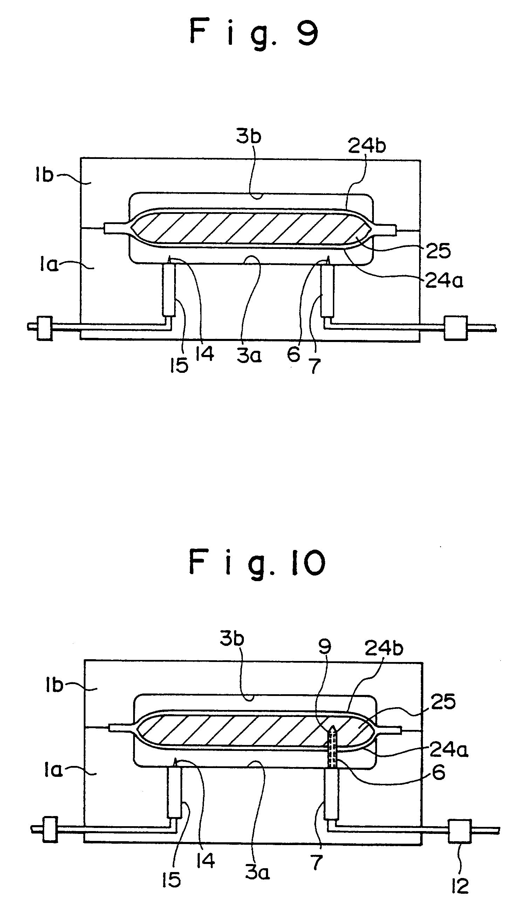

As shown in Fig.5, the molten thermoplastic resin 25 is supplied between the skin materials 24a and 24b and, immediately thereafter, the second mold 1b is lowered to the position DOWN to close the molds 1a and 1b and the end portions of skin materials 24a and 24b are sandwiched between parting faces 4a and 4b of the molds to fix them (t₁ in Fig.3), whereby the molten thermoplastic resin 25 supplied between skin materials 24a and 24b is wrapped therebetween with extending the skin materials and thus is in an enclosed state (shown in Fig.9).

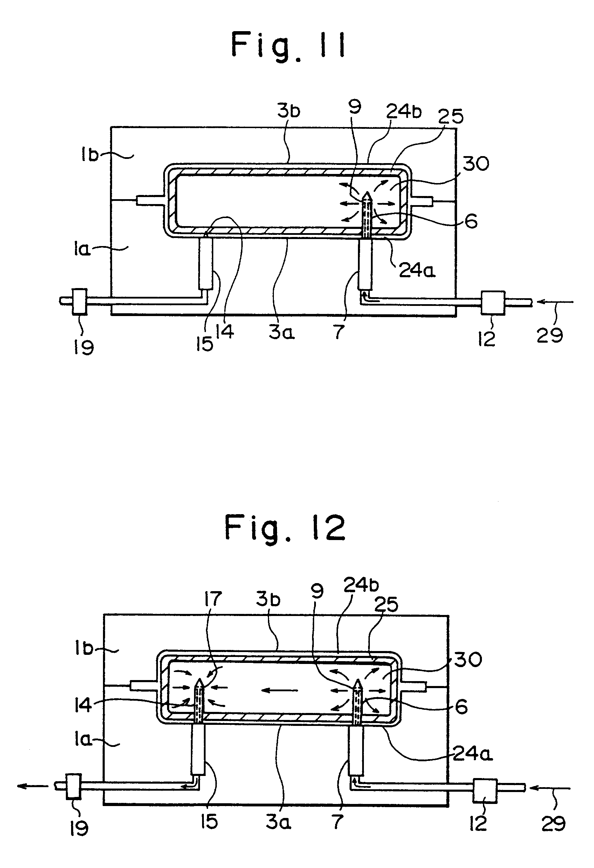

After lapse of 1 - 30 seconds, preferably 1 - 20 seconds, from the closing, the first driving device 7 is worked (t₂ in Fig.3) to allow the tip portion of the first hollow pin 6 to pierce through the first skin material 24a and to insert it into the molten thermoplastic resin 25 (shown in Fig.10). In this case, it is necessary that the first hollow pin 6 is projected in such a manner that the tip does not pierce the second skin material 24b. In order to make more uniform the thickness of resin layer which is a substrate of the resulting hollow molded article, it is preferred that the opening 9 of the first hollow pin 6 is positioned at nearly the center of molten resin layer 25 (nearly the center between skin material 24a and skin material 24b).

Then, the first gas-supply valve 12 is opened (t₂ in Fig.3) to inject pressurized gas 29 from opening 9 of the first hollow pin 6. The injected pressurized gas 29 expands the molten resin 25 thereby extending the skin materials 24a and 24b, whereby the skin materials 24a and 24b are brought into close contact with cavity faces 3a and 3b, and at the same time, there is formed a hollow molded article, or part, 30 comprising thermoplastic resin 25 to which the skin materials 24a and 24b are thermocompression bonded (shown in Fig.11).

The pressurized gas used must have a pressure sufficient to expand the molten thermoplastic resin 25 together with the skin materials 24a and 24b, the resin 25 being wrapped with the skin materials 24a and 24b and thus being in an enclosed state. The gas is normally used in a state pressurized to 2-10 kg/cm².

Examples of the gas are air, nitrogen and the like. Air is preferably used as the gas from the points of workability, economy and safety.

After the hollow part 30 is formed by the injection of the pressurized gas 29, with continuing the injection of gas 29, this state is maintained for 1-20 seconds, preferably 10-15 seconds so that the resin 25 is cooled to such extent as losing its fluidity. Thereafter, the second driving device 15 is worked (t₃ in Fig.3) to allow the tip portion of the second hollow pin 14 to pierce through the first skin material 24a and resin layer 25 and to insert the tip portion into the hollow part 30 (shown in Fig.12). When the second hollow pin 14 is inserted into the hollow part 30, gas is begun to be discharged through opening 17 of the second hollow pin 14. In this state, the gas is continuously supplied from the first hollow pin 6 while the gas is discharged from the second hollow pin 14, thereby to make the gas flow in the hollow part 30 and then to discharge the gas which has been heated by the heat of molten resin 25 into the atmosphere from opening 17 of the second hollow pin 14 through the pressure-control valve 19. The arrows in Fig.12 show the flow of the gas 29.

In this case, the gas-discharging pressure and the gas-supplying pressure are controlled by pressure-control valve 19 and the first gas-supply valve 12, respectively, so that the gas-supplying pressure and the gas-discharging pressure can suitably balance while keeping an internal pressure of the hollow part 30 necessary to maintain the shape of the hollow part. Such internal pressure is preferably 2-10 kg/cm².

In this way, a flow of gas is generated in the hollow part 30, and, by injecting a gas lower in temperature than the resin 25 into the hollow part 30, the hollow part is efficiently and uniformly cooled from inside owing to the circulation of the gas. Thus the molten resin 25 solidifies in a short time.

After the molten resin 25 has completely solidified, the first gas-supply valve 12 is closed to stop the supply of gas (t₄ in Fig.3). Then, the second mold 1b is elevated to the position UP to open the molds and the resulting hollow molded article having skin materials is then removed (t₆ in Fig.3). After supply of the gas is stopped, the first hollow pin 6 and the second hollow pin 14 are fully put in the first hole 5 and the second hole 13 in the mold 1a, respectively (t₅ in Fig.3). These hollow pins 6 and 14 may be fully put in the holes before opening of the molds or after removal of the article. The gas remaining in the hollow part 30 after stopping the supply of gas may be discharged from the second hollow pin 14 before removal of the article or may be spontaneously discharged from the fine holes left after the article is taken out and the hollow pins are drawn out.

In this way, a hollow molded article having skin materials on the whole surface thereof can be produced. The hollow molded article may have marks left after the hollow pins 6 and 14 have been drawn out, but they can be made merely fine traces by employing hollow pins which are as fine as possible. Furthermore, for some skin materials, the marks can be made apparently unrecognizable owing to their restoring force, etc.

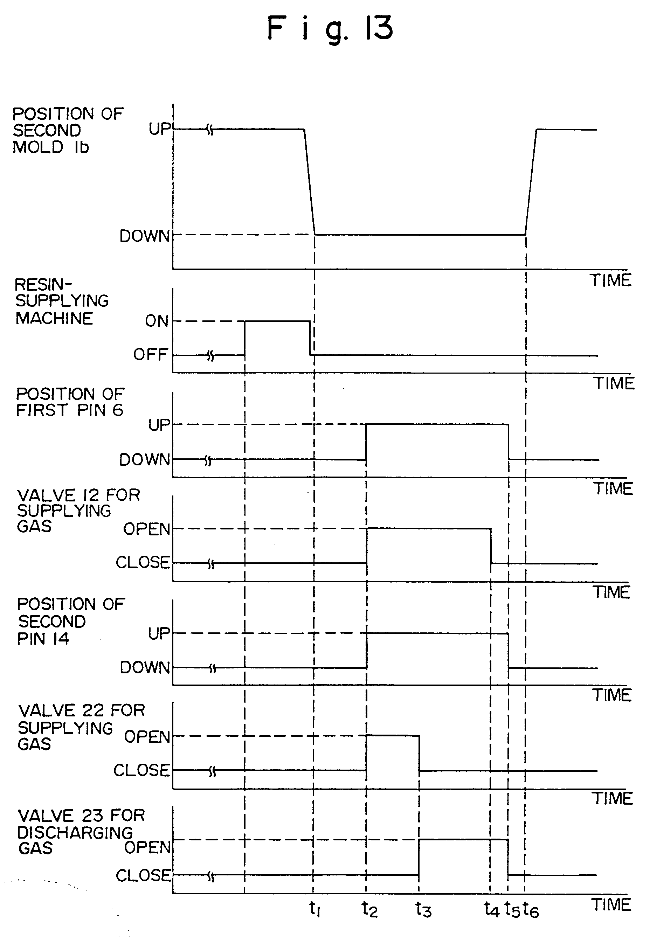

Next, production of a hollow molded article having skin materials on the whole surface thereof using the molds shown in Fig.2 will be explained referring to Figs.13-19.

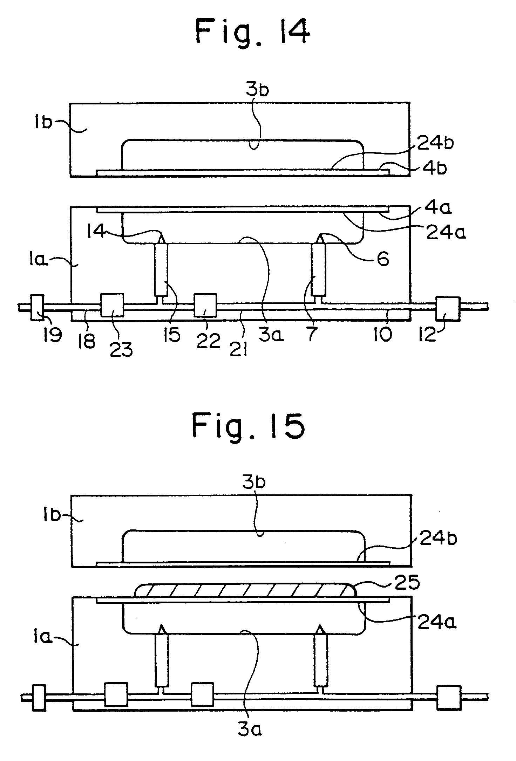

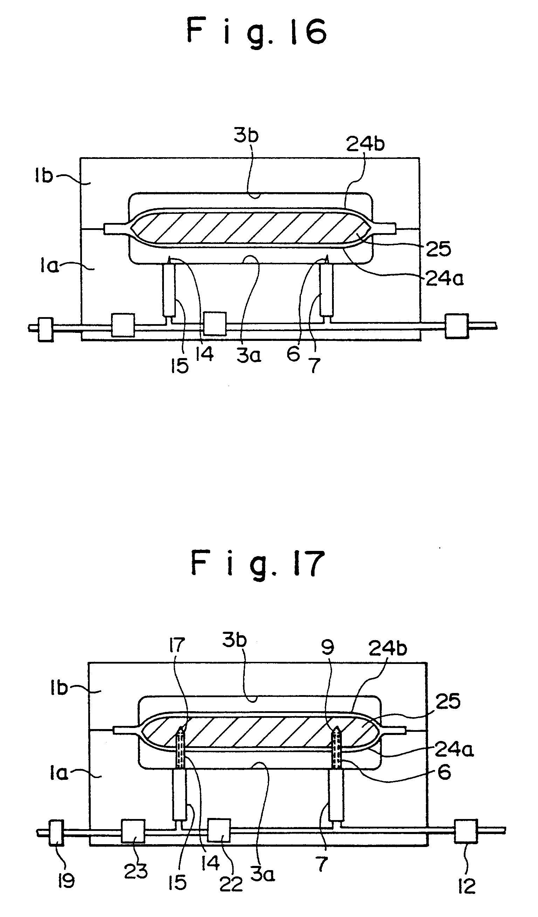

First, in an open state where the second mold 1b is at the position UP in Fig.13, the first skin material 24a and the second skin material 24b are provided on the first mold 1a and the second mold 1b, respectively (shown in Fig.14), in the same manner as mentioned above, and then, molten thermoplastic resin 25 is supplied between the first skin material 24a and the second skin material 24b (shown in Fig.15). Immediately thereafter, the second mold 1b is lowered to the position DOWN to close both the molds 1a and 1b (t₁ in Fig.13), and thus, the molten thermoplastic resin 25 is in the state of being enclosed with the skin materials 24a and 24b (shown in Fig.16).

After lapse of 1 - 30 seconds, preferably 1 - 20 seconds, from the closing, the first driving device 7 and the second driving device 15 are worked (t₂ in Fig.13) to allow the tip portions of the first hollow pin 6 and the second hollow pin 14 to pierce through the first skin material 24a thereby to insert the tip portions into the molten thermoplastic resin 25 (shown in Fig.17).

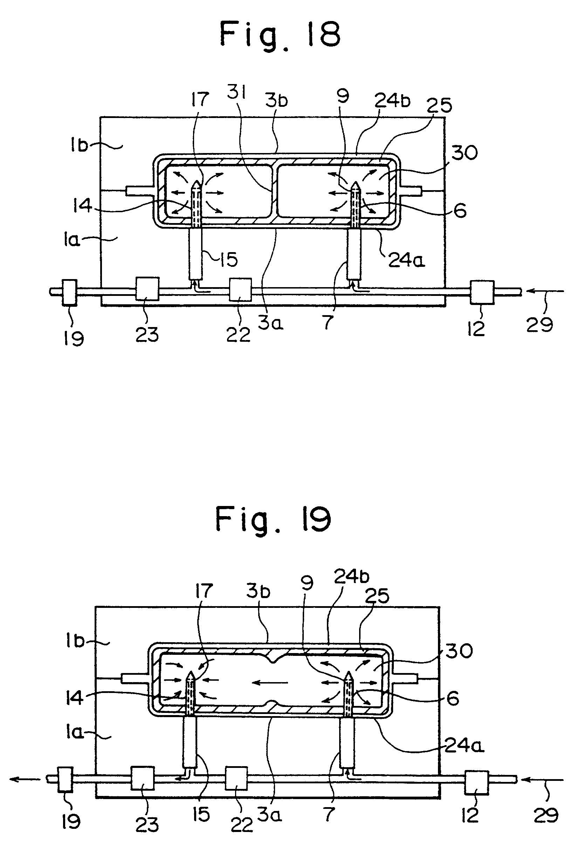

Then, the first gas-supply valve 12 and the second gas-supply valve 22 are opened with the gas-discharge valve 23 being closed (t₂ in Fig.13) to inject pressurized gas 29 from opening 9 of the first hollow pin 6 and opening 17 of the second hollow pin 14. The injected pressurized gas 29 expands the molten resin 25 thereby extending the skin materials 24a and 24b, whereby the skin materials 24a and 24b are brought into close contact with cavity faces 3a and 3b, and at the same time, there is formed a hollow molded article 30 comprising the thermoplastic resin 25 to which the skin materials 24a and 24b are thermocompression bonded (shown in Fig.18). In this case where the gas is injected from a plurality of hollow pins, the injection efficiency of the pressurized gas is improved, but a partition wall 31 of the resin is formed between these hollow pins. The thickness and the position of the partition wall 31 formed remarkably vary depending upon a difference between the pressures of supplying gas from the hollow pins, as well as a difference between the times of starting gas-supply from the hollow pins.

Then, resin 25 is cooled to such extent as losing its fluidity while the gas 29 is injected. Thereafter, with continuing the injection of the gas from the first hollow pin 6, the gas-discharge valve 23 is opened and simultaneously the second gas-supply valve 22 is closed to stop the gas conduit pipe 21 between the first hollow pin 6 and the second hollow pin 14 (t₃ in Fig.13), whereby the gas injection from the second hollow pin 14 is stopped and, at the same time, the gas discharge from opening 17 of this hollow pin 14 is started (shown in Fig.19). In this state, the gas is continuously supplied from the first hollow pin 6 with discharging the gas from the second hollow pin 14, and, as a result, the hollow body is efficiently and uniformly cooled from the inside by circulation of the gas having a low temperature in the hollow part 30 and thus the molten resin 25 solidifies in a short time. Furthermore, the partition wall 31 of the resin is broken by such circulation of the gas.

After the molten resin 25 has completely solidified, the first gas-supply valve 12 is closed to stop the supply of gas (t₄ in Fig.13). Then, the second mold 1b is elevated to the position UP to open the molds and then the resulting hollow molded article having skin materials is removed (t₆ in Fig.13). After supply of the gas is stopped, the first hollow pin 6 and the second hollow pin 14 are fully put in the first hole 5 and the second hole 13 in the mold 1a, respectively (t₅ in Fig.13). In this way, a hollow molded article having skin materials applied to the whole surface thereof is obtained. In this case where the second hollow pin is constructed as that having both the functions of gas-supplying and gas-discharging as mentioned above, the total number of the hollow pins may be reduced and hence, marks of the hollow pins diminish.

Using the above-described methods, a hollow molded article having a skin material can be efficiently cooled by a simple apparatus and a simple operation without using the conventional complicated apparatus or special cooling materials. Furthermore, the resin hollow molded article can be cooled uniformly and in a short time without temporary reduction of pressure in the hollow part and thus, a hollow molded article having a skin material free of distortion can be obtained.

Furthermore, according to the method of the present invention, there can be easily obtained thermoplastic resin hollow molded articles having a skin material which is not restricted by the resin used and can be readily controlled in the wall thickness to give a uniform wall thickness and the method can be applied to articles having a shape of high blow ratio. Moreover, hollow molded articles having hollow ribs can be produced by selecting molding conditions and the resulting hollow molded articles are light in weight and can be employed for various uses.

### [Examples]

The present invention will be explained in more detail by the following nonlimiting examples.

The skin materials and the thermoplastic resins used in the examples are as follows:
- Skin material A(24b):: Polypropylene sheet (0.3 mm thick)
- Skin material B(24a):: Foamed polypropylene sheet laminated with a non-rigid polyvinyl chloride sheet as a surface layer (3 mm thick)
- Polypropylene resin:: SUMITOMO NOBLEN AX568 manufactured by Sumitomo Chemical Co., Ltd.

### Example 1

A thermoplastic resin hollow molded article having skin materials on the whole surface thereof was produced using the molding machine shown in Fig.1 by the steps shown in Figs.4, 5 and 9 to 12 in accordance with the time chart shown in Fig.3.

The first skin material 24a was stretched to cover cavity face 3a of the first mold 1a in an open state and both ends of the skin material were fixed onto parting face 4a by a pressure sensitive adhesive double coated tape. Similarly, the second skin material 24b was stretched to cover cavity face 3b of the second mold 1b and both ends of the skin material were fixed onto parting face 4b by a pressure sensitive adhesive double coated tape (shown in Fig.4). The first hollow pin 6 and the second hollow pin 14 were put or received in the first mold 1a.

Polypropylene resin 25 molten at 230°C in an amount of 40 vol% based on the cavity volume was uniformly supplied onto the first skin material 24a stretched over the cavity face 3a of the first mold 1a from T-die 27 provided at the tip of portable extruder 26 which was moved horizontally (shown in Figs.5 and 7).

Immediately after the resin was supplied, the second mold 1b was lowered to close both the molds 1a and 1b to enclose the molten resin 25 with both the skin materials 24a and 24b (shown in Fig.9).

After lapse of 15 seconds from the closing of the molds, the first hollow pin 6 was projected from the cavity face 3a of the first mold 1a and the tip portion of the pin 6 was inserted in the molten resin 25 by piercing it through the skin material 24a in such a manner that the opening 9 of the pin 6 was positioned at nearly the center between the skin materials 24a and 24b (shown in Fig.10). Immediately after the projection of the pin, pressurized air 29 (room temperature) under a pressure of 10 kg/cm² was injected into the molten resin 25 from the opening 9 (shown in Fig.11).

Subsequently, with continuing the injection of air 29 from the opening 9, the second hollow pin 14 was inserted in the formed hollow part 30 by piercing it through the skin material 24a and resin layer 25 after lapse of 15 seconds from the starting of the injection of air 29 from the opening 9, and the air in the hollow part 30 was discharged from opening 17 under a discharging pressure of 4.5 kg/cm² to cause circulation of air in the hollow part 30 (shown in Fig.12).

After lapse of 20 seconds from the starting of the air-discharge from the opening 17, injection of the pressurized air 29 from the opening 9 was stopped and the air remaining in the hollow part 30 was discharged, and thereafter, the first hollow pin 6 and the second hollow pin 14 were put back in the mold 1a.

The second mold 1b was elevated to open the molds, and then a hollow molded article having two skin materials on the upper and under surfaces thereof was taken out from the molds.

The resulting hollow molded article was free from distortion and had a good appearance.

Presence or absence of the distortion was determined in the following manner. That is, the hollow molded article was put on a horizontal table with the side of the polypropylene sheet facing upward, and when there was a space between the surface of the table and the under surface of the hollow molded article, the molded article was regarded to have a distortion.

### Comparative Example 1

A hollow molded article was produced in the same manner as in Example 1, except that the discharging of air was not carried out and the injection time of the pressurized air was 35 seconds.

The resulting hollow molded article had a good appearance, but was considerably distorted and the desired shape could not be obtained. Further, the hollow molded article was not sufficiently cooled in the molds.

### Comparative Example 2

A hollow molded article was produced in the same manner as in Example 1, except that the supplying time of the pressurized air was 35 seconds and supply of the gas from the first hollow pin 6 and discharge of the gas from the second hollow pin 14 were started at the same time.

The hollow part was not sufficiently formed in the resulting molded article and the desired shape was not obtained.

### Example 2

A thermoplastic resin hollow molded article having skin materials on the whole surface thereof was produced using the molding machine shown in Fig.2 by the steps shown in Figs.14 to 19 in accordance with the time chart shown in Fig.13. The resulting hollow molded article had no distortion and had good appearance as in Example 1. Further, there is no partition wall of the resin in the hollow part in the resulting article.

It will be appreciated that in the above-described methods the hollow part is efficiently and uniformly cooled from the inside by circulating a low-temperature gas in the hollow part and, therefore, the molten resin is solidified in a short time.

Furthermore, since the gas used for the formation of the hollow part is continuously used as the cooling gas, the internal pressure in the hollow part can be maintained at a high level until the molten resin sufficiently solidifies and, therefore, distortion of the molded article due to the temporary reduction of the internal pressure does not occur. In addition, since gas will circulate faster than liquid, the whole molded article can be cooled uniformly under such a condition that the difference in temperature at the gas-supply opening and the gas-discharge opening is very small. Therefore, distortion of molded articles which would be caused by ununiform cooling does not occur.

Furthermore, since the pressurized gas used for formation of the hollow part is used as a cooling gas, there is no need to provide additional mechanisms such as an injection device and an injection nozzle for another special cooling material and therefore extra operational steps such as the injection and discharge of a special cooling material are not required. Thus, a hollow molded article having a skin material can be efficiently cooled by a simple apparatus and a simple operation, without using complicated apparatus or special cooling materials which have hitherto been needed.

The "open state" referred to herein means such a state that the cavity clearance between the cavity face of the first mold and that of the second mold is larger than the thickness of the desired article (a hollow molded article having a skin material).

## Claims

1. A method for producing a hollow molded article having a skin material, the method comprising the steps of:
(a) with a first mold (1a) and a second mold (1b) in an open state, providing a first skin material (24a) on the first mold (1a) to cover a cavity face (3a) of the first mold and a parting face (4a) disposed at a periphery of said cavity face and providing a second skin material (24b) on the second mold (1b) to cover a cavity face (3b) of the second mold and a parting face (4b) disposed at a periphery of the cavity face of the second mold, said cavity faces each having a desired configuration;
(b) supplying a molten thermoplastic resin (25) between the first skin material and the second skin material;
(c) closing the first mold and the second mold to enclose the molten thermoplastic resin with the first skin material and the second skin material;
(d) inserting a first hollow pin (6) into the molten thermoplastic resin and supplying a gas into the resin through the first hollow pin whereby the first skin material and the second skin material are brought into contact with the respective cavity faces of the first mold and the second mold and a hollow article is formed;
(e) inserting a second hollow pin (16) into said hollow article and supplying the gas through the first hollow pin while discharging the gas through the second hollow pin, thereby circulating the gas in the hollow article to cool and solidify the molten thermoplastic resin; and
(f) opening the first mold and the second mold and removing the hollow article.

2. A method for producing a hollow molded article having a skin material, the method comprising the steps of:
(a) with a first mold (1a) and a second mold (1b) in an open state, providing a first skin material (24a) on the first mold (1a) to cover a cavity face (3a) of the first mold and a parting face (4a) disposed at a periphery of said cavity face and providing a second skin material (24b) on the second mold (1b) to cover a cavity face (3b) of the second mold and a parting face (4b) disposed at a periphery of the cavity face of the second mold, said cavity faces each having a desired configuration;
(b) supplying a molten thermoplastic resin (25) between the first skin material and the second skin material;
(c) closing the first mold and the second mold to enclose the molten thermoplastic resin with the first skin material and the second skin material;
(d) inserting a first hollow pin (6) and a second hollow pin (16) into the molten thermoplastic resin and supplying a gas into the resin through the first hollow pin and the second hollow pin whereby the first skin material and the second skin material are brought into contact with the respective cavity faces of the first mold and the second mold and a hollow article is formed;
(e) supplying the gas through the first hollow pin while discharging the gas through the second hollow pin, thereby circulating the gas in the hollow article to cool and solidify the molten thermoplastic resin; and
(f) opening the first mold and the second mold and removing the hollow article.

3. A method according to claim 2, wherein the second hollow pin is switched from the gas-supplying state to the gas-discharging state while the gas is supplied through the first hollow pin.

4. A method according to claim 1, 2 or 3, wherein the molten thermoplastic resin is supplied in an amount of 5-50 vol% of a cavity space to be defined by the cavity face of the first mold and the cavity face of the second mold.

5. A method according to any one of claims 1 to 4, wherein the first hollow pin and the second hollow pin are inserted into the molten thermoplastic resin by causing them to project from the cavity face of a said mold.

6. A method according to any one of the preceding claims, wherein the discharge of the gas through the second hollow pin is started 1-20 seconds after the hollow article is formed.

7. A method according to any one of the preceding claims, wherein the gas is supplied through the first hollow pin while the gas is discharged through the second hollow pin to keep an internal pressure in the hollow article necessary to maintain the shape of the hollow article.

8. A method according to any one of the preceding claims, wherein the gas has a temperature which is lower than that of the resin when the gas is injected.

9. A method according to any one of the preceding claims, wherein the gas is a pressurized gas.

10. A method according to any one of the preceding claims, wherein the gas is air.

11. A method according to any one of the preceding claims, wherein the first skin material and the second skin material are fixed to the respective parting faces of the first mold and the second mold such that they do not contact the respective cavity faces of said molds.

## Patentansprüche

1. Verfahren zum Herstellen eines Hohlformkörpers mit einem Oberflächenmaterial, wobei das Verfahren die folgenden Schritte aufweist:
(a) im offenen Zustand einer ersten Form (1a) und einer zweiten Form (1b): Aufbringen eines ersten Oberflächenmaterials (24a) auf die erste Form (1a) zum Abdecken einer Hohlraumfläche (3a) der ersten Form und einer an einem Rand der Hohlraumfläche angeordneten Trennfläche (4a), und Aufbringen eines zweiten Oberflächenmaterials (24b) auf die zweite Form (1b) zum Abdecken einer Hohlraumfläche (3b) der zweiten Form und einer Trennfläche (4b), die an einem Rand der Hohlraumfläche der zweiten Form angeordnet ist, wobei die Hohlraumflächen jeweils eine gewünschte Konfiguration aufweisen;
(b) Zuführen eines geschmolzenen thermoplastischen Harzes (25) zwischen dem ersten Oberflächenmaterial und dem zweiten Oberflächenmaterial;
(c) Schließen der ersten Form und der zweiten Form, um das geschmolzene thermoplastische Harz mit dem ersten Oberflächenmaterial und dem zweiten Oberflächenmaterial einzuschließen;
(d) Einbringen eines ersten Hohlstiftes (6) in das geschmolzene thermoplastische Harz und Zuführen eines Gases in das Harz durch den ersten Hohlstift, wobei das erste Oberflächenmaterial und das zweite Oberflächenmaterial in Kontakt mit den entsprechenden Hohlraumflächen der ersten Form und der zweiten Form gebracht werden und ein Hohlkörper geformt wird;
(e) Einbringen eines zweiten Hohlstiftes (16) in den Hohlkörper und Zuführen des Gases durch den ersten Hohlstift während des Ablassens des Gases durch den zweiten Hohlstift, wobei das Gas in dem Hohlkörper umgewälzt wird, um das geschmolzene thermoplastische Harz abzukühlen und erstarren zu lassen; und
(f) Öffnen der ersten Form und der zweiten Form und Entnahme des Hohlkörpers.

2. Verfahren zum Herstellen eines Hohlformkörpers mit einem Oberflächenmaterial, wobei das Verfahren die folgenden Schritte aufweist:
(a) im offenen Zustand einer ersten Form (1a) und einer zweiten Form (1b): Aufbringen eines ersten Oberflächenmaterials (24a) auf die erste Form (1a) zum Abdecken einer Hohlraumfläche (3a) der ersten Form und einer an einem Rand der Hohlraumfläche angeordneten Trennfläche (4a), und Aufbringen eines zweiten Oberflächenmaterials (24b) auf die zweite Form (1b) zum Abdecken einer Hohlraumfläche (3b) der zweiten Form und einer Trennfläche (4b), die an einem Rand der Hohlraumfläche der zweiten Form angeordnet ist, wobei die Hohlraumflächen jeweils eine gewünschte Konfiguration aufweisen;
(b) Zuführen eines geschmolzenen thermoplastischen Harzes (25) zwischen dem ersten Oberflächenmaterial und dem zweiten Oberflächenmaterial;
(c) Schließen der ersten Form und der zweiten Form, um das geschmolzene thermoplastische Harz mit dem ersten Oberflächenmaterial und dem zweiten Oberflächenmaterial einzuschließen;
(d) Einbringen eines ersten Hohlstiftes (6) und eines zweiten Hohlstiftes (16) in das geschmolzene thermoplastische Harz und Zuführen eines Gases in das Harz durch den ersten Hohlstift und den zweiten Hohlstift, wobei das erste Oberflächenmaterial und das zweite Oberflächenmaterial in Kontakt mit den entsprechenden Hohlraumflächen der ersten Form und der zweiten Form gebracht werden und ein Hohlkörper geformt wird;
(e) Zuführen des Gases durch den ersten Hohlstift während des Ablassens des Gases durch den zweiten Hohlstift, wobei das Gas in dem Hohlkörper umgewälzt wird, um das geschmolzene thermoplastische Harz abzukühlen und erstarren zu lassen; und
(f) Öffnen der ersten Form und der zweiten Form und Entnahme des Hohlkörpers.

3. Verfahren nach Anspruch 2, wobei der zweite Hohlstift vom Gaszufuhrzustand zum Gasablaßzustand umgeschaltet wird, während das Gas durch den ersten Hohlstift zugeführt wird.

4. Verfahren nach Anspruch 1, 2 oder 3, wobei das geschmolzene thermoplastische Harz in einem Anteil von 5-50 Vol.-% eines durch die Hohlraumfläche der ersten Form und die Hohlraumflache der zweiten Form abzugrenzenden Hohlraums zugeführt wird.

5. Verfahren nach einem der Ansprüche 1 bis 4, wobei der erste Hohlstift und der zweite Hohlstift in das geschmolzene thermoplastische Harz eingebracht werden, indem man sie von der Hohlraumfläche einer der vorerwähnten Formen hervorstehen läßt.

6. Verfahren nach einem der vorstehenden Ansprüche, wobei mit dem Ablassen des Gases durch den zweiten Hohlstift 1-20 Sekunden nach dem Formen des Hohlkörpers begonnen wird.

7. Verfahren nach einem der vorstehenden Ansprüche, wobei das Gas durch den ersten Hohlstift zugeführt wird, während das Gas durch den zweiten Hohlstift abgelassen wird, um in dem Hohlkörper einen Innendruck zu halten, der zur Beibehaltung der Form des Hohlformkörpers notwendig ist.

8. Verfahren nach einem der vorstehenden Ansprüche, wobei das Gas beim Einblasen eine niedrigere Temperatur als das Harz hat.

9. Verfahren nach einem der vorstehenden Ansprüche, wobei das Gas ein Druckgas ist.

10. Verfahren nach einem der vorstehenden Ansprüche, wobei das Gas Luft ist.

11. Verfahren nach einem der vorstehenden Ansprüche, wobei das erste Oberflächenmaterial und das zweite Oberflächenmaterial an den jeweiligen Trennflächen der ersten Form und der zweiten Form so fixiert werden, daß sie die jeweiligen Hohlraumflächen der Formen nicht berühren.

## Revendications

1. Procédé de fabrication d'un article moulé creux ayant une matière de peau, le procédé comportant des étapes consistant à :
(a) avec un premier moule (1a) et un deuxième moule (1b) dans un état ouvert, délivrer une première matière de peau (24a) sur le premier moule (1a) afin de couvrir une face de cavité (3a) du premier moule et une face de séparation (4a) disposée au niveau d'une périphérie de ladite face de cavité et délivrer une deuxième matière de peau (24b) sur le deuxième moule (1b) afin de couvrir une face de cavité (3b) du deuxième moule et une face de séparation (4b) disposée au niveau d'une périphérie de la face de cavité du deuxième moule, lesdites faces de cavité ayant chacune une configuration souhaitée;
(b) délivrer une résine thermoplastique fondue (25) entre la première matière de peau et la deuxième matière de peau;
(c) fermer le premier moule et le deuxième moule afin d'enfermer la résine thermoplastique fondue avec la première matière de peau et la deuxième matière de peau;
(d) insérer un premier axe creux (6) dans la résine thermoplastique fondue et délivrer un gaz dans la résine à travers le premier axe creux de sorte que la première matière de peau et la deuxième matière peau sont amenées en contact avec les faces de cavité respectives du premier moule et du deuxième moule et un article creux est formé;
(e) insérer un deuxième axe creux (16) dans ledit article creux et délivrer le gaz à travers le premier axe creux tout en évacuant le gaz à travers le deuxième axe creux, en faisant ainsi circuler le gaz dans l'article creux afin de refroidir et solidifier la résine thermoplastique fondue; et
(f) ouvrir le premier moule et le deuxième moule et enlever l'article creux.

2. Procédé de fabrication d'un article moulé creux ayant une matière de peau, le procédé comportant les étapes consistant à :
(a) avec un premier moule (1a) et un deuxième moule (1b) dans un état ouvert, délivrer une première matière de peau (24a) sur le premier moule (1a) afin de couvrir une face de cavité (3a) du premier moule et une face de séparation (4a) disposée au niveau d'une périphérie de ladite face de cavité et délivrer une deuxième matière de peau (24b) sur le deuxième moule (1b) afin de couvrir une face de cavité (3b) du deuxième moule et une face de séparation (4b) disposée au niveau d'une périphérie de la face de cavité du deuxième moule, lesdites faces de cavité ayant chacune une configuration souhaitée;
(b) délivrer une résine thermoplastique fondue (25) entre la première matière de peau et la deuxième matière de peau;
(c) fermer le premier moule et le deuxième moule afin d'enfermer la résine thermoplastique fondue avec la première matière de peau et la deuxième matière de peau;
(d) insérer un premier axe creux (6) et un deuxième axe creux (16) dans la résine thermoplastique fondue et délivrer un gaz dans la résine à travers le premier axe creux et le deuxième axe creux de sorte que la première matière de peau et la deuxième matière peau sont amenées en contact avec les faces de cavité respectives du premier moule et du deuxième moule et un article creux est formé;
(e) délivrer le gaz à travers le premier axe creux tout en évacuant le gaz à travers le deuxième axe creux, en faisant ainsi circuler le gaz dans l'article creux afin de refroidir et solidifier la résine thermoplastique fondue; et
(f) ouvrir le premier moule et le deuxième moule et enlever l'article creux.

3. Procédé selon la revendication 2, dans lequel le deuxième axe creux est commuté de l'étape d'alimentation en gaz vers l'étape d'évacuation de gaz alors que le gaz est délivré à travers le premier axe creux.

4. Procédé selon la revendication 1, 2 ou 3, dans lequel la résine thermoplastique fondue est délivrée en une quantité de 5 à 50% en volume d'un espace de cavité devant être défini par la face de cavité du premier moule et la face de cavité du deuxième moule.

5. Procédé selon l'une quelconque des revendications 1 à 4, dans lequel le premier axe creux et le deuxième axe creux sont insérés dans la résine thermoplastique fondue en les amenant à dépasser de la face de cavité dudit moule.

6. Procédé selon l'une quelconque des revendications précédentes, dans lequel l'évacuation du gaz à travers le deuxième axe creux commence 1 à 20 secondes après que l'article creux ait été formé.

7. Procédé selon l'une quelconque des revendications précédentes, dans lequel le gaz est délivré à travers le premier axe creux alors que le gaz est évacué à travers le deuxième axe creux afin de maintenir une pression interne dans l'article creux nécessaire pour conserver la forme de l'article creux.

8. Procédé selon l'une quelconque des revendications précédentes, dans lequel le gaz a une température qui est inférieure à celle de la résine lorsque le gaz est injecté.

9. Procédé selon l'une quelconque des revendications précédentes, dans lequel le gaz est un gaz sous pression.

10. Procédé selon l'une quelconque des revendications précédentes, dans lequel le gaz est de l'air.

11. Procédé selon l'une quelconque des revendications précédentes, dans lequel la première matière de peau et la deuxième matière de peau sont fixées sur les faces de séparation respectives du premier moule et du deuxième moule de telle sorte qu'elles ne viennent pas en contact avec les faces de cavité respectives desdits moules.
